# EUROPEAN PATENT APPLICATION

(11) **EP 4 755 231 A1**
(43) Date of publication of application: **10.06.2026**
(21) Application number: 24849522.8
(22) Date of filing: 26.07.2024
(51) Int. Cl.: A24F 40/90, A24F 40/40, A24F 40/50, A24F 40/65, H02J 7/00, A24F 40/05

(54) **AEROSOL-GENERATING DEVICE**

(30) Priority: 31.07.2023 KR 20230099922; 13.11.2023 KR 20230156310
(71) Applicant: KT&G Corporation, Daedeok-gu Daejeon 34337 (KR)
(72) Inventor: SEO, Jang Won, Daejeon 34023 (KR); KIM, Jae Hyuk, Seoul 06352 (KR); PARK, Sang Cheol, Suwon-si, Gyeonggi-do 16469 (KR); WOO, Young Min, Hwaseong-si, Gyeonggi-do 18391 (KR); LEE, Won Kyeong, Guri-si, Gyeonggi-do 11920 (KR); JANG, Chul Ho, Bucheon-si, Gyeonggi-do 14725 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010957
(87) International publication number: WO 2025/028953

(57) **Abstract**

An aerosol-generating device includes a main body, an aerosol generator arranged in the main body and configured to generate aerosols when power is supplied, a power module arranged in the main body and configured to supply power to the aerosol generator by wirelessly receiving power, and a battery module configured to charge power and removably mounted in the main body configured to wirelessly transmit the power to the power module.

## Description

### Technical Field

Embodiments relate to an aerosol-generating device, and more particularly to, an aerosol-generating device in which a battery module configured to wirelessly supply power may be removably mounted.

### Background Art

The demand for aerosol generating devices that produce aerosols through a non-combustion method, instead of burning cigarettes to generate aerosols, is increasing. An aerosol generating device, for example, is a device that generates aerosols from an aerosol generating material using a non-combustion method and supplies them to the user, or generates flavored aerosols by passing vapor produced from the aerosol generating material through a flavoring medium.

An aerosol-generating device includes several components and a battery configured to supply power to the components. To facilitate the portability of an aerosol-generating device, a rechargeable battery is used in the aerosol-generating device. The aerosol-generating device includes a terminal electrically connecting the battery and the components of the aerosol-generating device to each other.

During a process of generating aerosols by the aerosol-generating device, residual materials, such as liquid or residues of aerosol-generating materials, are generated, and these residual materials may leak to the side of a battery or outside through a space where the terminal of the aerosol-generating device is installed. To create a comfortable usage environment for an aerosol-generating device, it is necessary to improve a sealing structure capable of keeping a mounting space of a battery clean.

### Disclosure of Invention

### Technical Problem

An object of embodiments is to provide an aerosol-generating device in which a battery may be removably mounted.

Also, an object of embodiment is to provide an aerosol-generating device in which a completely sealed structure is implemented between a space in which a battery of the aerosol-generating device is mounted and an internal space of the aerosol-generating device.

In addition, an object of embodiments is to provide an aerosol-generating device with convenient battery power charging.

Also, an object of embodiments is to protect components and a battery of an aerosol-generating device from foreign materials or liquid.

### Solution to Problem

An aerosol-generating device related to an embodiment includes a main body, an aerosol generator arranged in the main body and configured to generate aerosols when power is supplied, a power module arranged in the main body and configured to supply power to the aerosol generator by wirelessly receiving power, and a battery module configured to charge power, removably mounted in the main body, and configured to wirelessly transmit the power to the power module.

The battery module may include a battery cell configured to be charged with power, a transceiver configured to operate in a charging mode of charging power to the battery cell by wirelessly receiving power or a transmission mode of wirelessly transmitting power of the battery cell to the power module, and an adjuster configured to generate a signal for the transceiver to operate in the transmission mode or the charging mode.

The transceiver may include an antenna circuit and a voltage regulator arranged between the battery cell and the antenna circuit and configured to regulate a voltage.

The transceiver may further include a rectifier configured to convert alternating current power into direct current power or to convert direct current power into alternating current power.

The transceiver may further include an impedance matcher configured to match an impedance of the voltage regulator with an impedance of the antenna circuit.

A receiver may include a reception antenna circuit, and a rectifier arranged between the reception antenna circuit and the battery cell and configured to convert alternating current power into direct current power.

The receiver may further include a voltage regulator arranged between the battery cell and the reception antenna circuit and configured to regulate a voltage, and an impedance matcher configured to match an impedance of the voltage regulator with an impedance of the reception antenna circuit.

A transmitter may include a transmission antenna circuit, and a rectifier arranged between the transmission antenna circuit and the battery cell and configured to convert direct current power into alternating current power.

The transmitter may further include a voltage regulator arranged between the battery cell and the transmission antenna circuit and configured to regulate a voltage, and an impedance matcher configured to match an impedance of the voltage regulator with an impedance of the transmission antenna circuit.

The aerosol-generating device may further include a capacitor arranged in the main body and configured to charge power wirelessly supplied from the battery module, and a communication unit arranged in the main body and configured to transmit a wireless signal to the battery module.

The battery module may further include a battery communicator configured to wirelessly communicate with the communication unit. The adjuster may generate a signal based on the wireless signal transmitted through the battery communicator.

The aerosol-generating device may further include a controller configured to control the aerosol generator, and a communication unit arranged in the main body and configured to transmit a wireless signal to the battery module.

The battery module may further include a battery communicator configured to wirelessly communicate with the communication unit. When the battery module operates in the charging mode, the controller may stop an operation in which the aerosol generator generates aerosols. When the charging mode of the battery module is terminated and the battery module operates in the transmission mode, the controller may initiate an operation in which the aerosol generator generates aerosols.

The battery module may further include a switch connected to the adjuster. The main body may include a button configured to operate the switch of the battery module mounted in the main body.

The main body may include a mounting space in which the battery module is mounted and an internal space in which the power module is mounted. The mounting space and the internal space may be separated from each other to block movement of materials between the mounting space and the internal space.

The aerosol-generating device may further include a position adjuster configured to adjust a position of the battery module with respect to the main body to align a center of the power module with a center of the battery module.

### Advantageous Effects of Invention

In an aerosol-generating device related to the embodiments described above, a battery may be removably mounted in a main body.

Also, power of the battery module may be wirelessly supplied to the main body of the aerosol-generating device. In addition, the battery module may be wirelessly charged with power from an external wireless power charger.

Also, there is no need to install, in the aerosol-generating device, a battery terminal for electrical connection between the battery module and the main body, and there is no need to install, in the aerosol-generating device, a terminal for charging to charge the battery module, and thus the configuration of the aerosol-generating device may be simplified.

In addition, because there is no need to install an electrical terminal for charging in the aerosol-generating device, a mounting space of the battery module may be completely separated from an internal space of the main body. Accordingly, foreign materials or moisture may be blocked from flowing into the interior of the aerosol-generating device from the outside. Also, residual materials, such as liquid generated in the aerosol-generating device, may be blocked from leaking into the battery module.

In addition, wireless power transmission/reception efficiency may increase by aligning the centers of the battery module and the main body by a position adjuster configured to adjust a position of the battery module.

Also, battery modules with various sizes may be used in the aerosol-generating device by using the position adjuster configured to adjust the position of the battery module.

### Brief Description of Drawings

FIG. 1 is a conceptual diagram schematically illustrating an aerosol-generating device related to an embodiment.
FIG. 2 is a conceptual diagram schematically illustrating an aerosol-generating device related to another embodiment.
FIG. 3 is a conceptual diagram schematically illustrating an aerosol-generating device related to another embodiment.
FIG. 4 is a block diagram schematically illustrating components of an aerosol-generating device related to another embodiment.
FIG. 5 is a schematic perspective view of the aerosol-generating device related to the embodiment shown in FIG. 4.
FIG. 6 is a block diagram schematically illustrating components of a transceiver of the aerosol-generating device related to the embodiment shown in FIG. 4.
FIG. 7 is a flowchart illustrating a power receiving operation of the aerosol-generating device related to the embodiments shown in FIGS. 4 to 6.
FIG. 8 is a flowchart illustrating a power transmitting operation of a battery module of the aerosol-generating device related to the embodiments shown in FIGS. 4 to 7.
FIG. 9 is a flowchart illustrating a wireless charging operation of the aerosol-generating device related to the embodiments shown in FIGS. 4 to 8.
FIG. 10 is a flowchart illustrating a wireless charging operation of a battery module of the aerosol-generating device related to the embodiments shown in FIGS. 4 to 9.
FIG. 11 is a block diagram schematically illustrating components of an aerosol-generating device related to another embodiment.
FIG. 12 is a block diagram schematically illustrating components of an aerosol-generating device related to another embodiment.
FIG. 13 is a schematic cross-sectional view of the aerosol-generating device related to the embodiment shown in FIG. 12.
FIG. 14 is a block diagram schematically illustrating components of an aerosol-generating device related to another embodiment.
FIG. 15 is a block diagram schematically illustrating some components of the aerosol-generating device related to the embodiments shown in FIGS. 12 and 14.
FIG. 16 is a block diagram schematically illustrating components of an aerosol-generating device related to another embodiment.
FIG. 17 is an exploded perspective view of a battery module of the aerosol-generating device related to the embodiment shown in FIG. 16.
FIG. 18 is a schematic perspective view of the aerosol-generating device related to the embodiment shown in FIG. 16.
FIG. 19 is a block diagram schematically illustrating components of the aerosol-generating device related to the embodiments shown in FIGS. 1 to 18.

### Best Mode for Carrying out the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, when an expression such as "at least any one" precedes arranged elements, it modifies all elements rather than each arranged element. For example, the expression "at least any one of a, b, and c" should be construed to include a, b, c, or a and b, a and c, b and c, or a, b, and c.

In an embodiment, an aerosol generating device may be a device that generates aerosols by electrically heating a cigarette accommodated in an interior space thereof.

The aerosol generating device may include a heater. In an embodiment, the heater may be an electro-resistive heater. For example, the heater may include an electrically conductive track, and the heater may be heated when currents flow through the electrically conductive track.

The heater may include a tube-shaped heating element, a plate-shaped heating element, a needle-shaped heating element, or a rod-shaped heating element, and may heat the inside or outside of a cigarette according to the shape of a heating element.

A cigarette may include a tobacco rod and a filter rod. The tobacco rod may be formed of sheets, strands, and tiny bits cut from a tobacco sheet. Also, the tobacco rod may be surrounded by a heat conductive material. For example, the heat conductive material may be, but is not limited to, a metal foil such as aluminum foil.

The filter rod may include a cellulose acetate filter. The filter rod may include at least one segment. For example, the filter rod may include a first segment configured to cool aerosols, and a second segment configured to filter a certain component in aerosols.

In another embodiment, the aerosol generating device may be a device that generates aerosols by using a cartridge containing an aerosol generating material.

The aerosol generating device may include a cartridge that contains an aerosol generating material, and a main body that supports the cartridge. The cartridge may be detachably coupled to the main body, but is not limited thereto. The cartridge may be integrally formed or assembled with the main body, and may also be fixed to the main body so as not to be detached from the main body by a user. The cartridge may be mounted on the main body while accommodating an aerosol generating material therein. However, the present disclosure is not limited thereto. An aerosol generating material may also be injected into the cartridge while the cartridge is coupled to the main body.

The cartridge may contain an aerosol generating material in any one of various states, such as a liquid state, a solid state, a gaseous state, a gel state, or the like. The aerosol generating material may include a liquid composition. For example, the liquid composition may be a liquid including a tobacco-containing material having a volatile tobacco flavor component, or a liquid including a non-tobacco material.

The cartridge may be operated by an electrical signal or a wireless signal transmitted from the main body to perform a function of generating aerosols by converting the phase of an aerosol generating material inside the cartridge into a gaseous phase. The aerosols may refer to a gas in which vaporized particles generated from an aerosol generating material are mixed with air.

In another embodiment, the aerosol generating device may generate aerosols by heating a liquid composition, and generated aerosols may be delivered to a user through a cigarette. That is, the aerosols generated from the liquid composition may move along an airflow passage of the aerosol generating device, and the airflow passage may be configured to allow aerosols to be delivered to a user by passing through a cigarette.

In another embodiment, the aerosol generating device may be a device that generates aerosols from an aerosol generating material by using an ultrasonic vibration method. At this time, the ultrasonic vibration method may mean a method of generating aerosols by converting an aerosol generating material into aerosols with ultrasonic vibration generated by a vibrator.

The aerosol generating device may include a vibrator, and generate a short-period vibration through the vibrator to convert an aerosol generating material into aerosols. The vibration generated by the vibrator may be ultrasonic vibration, and the frequency band of the ultrasonic vibration may be in a frequency band of about 100 kHz to about 3.5 MHz, but is not limited thereto.

The aerosol generating device may further include a wick that absorbs an aerosol generating material. For example, the wick may be arranged to surround at least one area of the vibrator, or may be arranged to contact at least one area of the vibrator.

As a voltage (for example, an alternating voltage) is applied to the vibrator, heat and/or ultrasonic vibrations may be generated from the vibrator, and the heat and/or ultrasonic vibrations generated from the vibrator may be transmitted to the aerosol generating material absorbed in the wick. The aerosol generating material absorbed in the wick may be converted into a gaseous phase by heat and/or ultrasonic vibrations transmitted from the vibrator, and as a result, aerosols may be generated.

For example, the viscosity of the aerosol generating material absorbed in the wick may be lowered by the heat generated by the vibrator, and as the aerosol generating material having a lowered viscosity is granulated by the ultrasonic vibrations generated from the vibrator, aerosols may be generated, but is not limited thereto.

In another embodiment, the aerosol generating device is a device that generates aerosols by heating an aerosol generating article accommodated in the aerosol generating device in an induction heating method.

The aerosol generating device may include a susceptor and a coil. In an embodiment, the coil may apply a magnetic field to the susceptor. As power is supplied to the coil from the aerosol generating device, a magnetic field may be formed inside the coil. In an embodiment, the susceptor may be a magnetic body that generates heat by an external magnetic field. As the susceptor is positioned inside the coil and a magnetic field is applied to the susceptor, the susceptor generates heat to heat an aerosol generating article. In addition, optionally, the susceptor may be positioned within the aerosol generating article.

In another embodiment, the aerosol generating device may further include a cradle.

The aerosol generating device may configure a system together with a separate cradle. For example, the cradle may charge a battery of the aerosol generating device. Alternatively, the heater may be heated when the cradle and the aerosol generating device are coupled to each other.

Hereinafter, the present disclosure will now be described more fully with reference to the accompanying drawings, in which exemplary embodiments of the present disclosure are shown such that one of ordinary skill in the art may easily work the present disclosure. The present disclosure may be implemented in a form that can be implemented in the aerosol generating devices of the various embodiments described above or may be implemented in various different forms, and is not limited to the embodiments described herein.

Hereinafter, embodiments of the present disclosure will be described in detail with reference to the drawings.

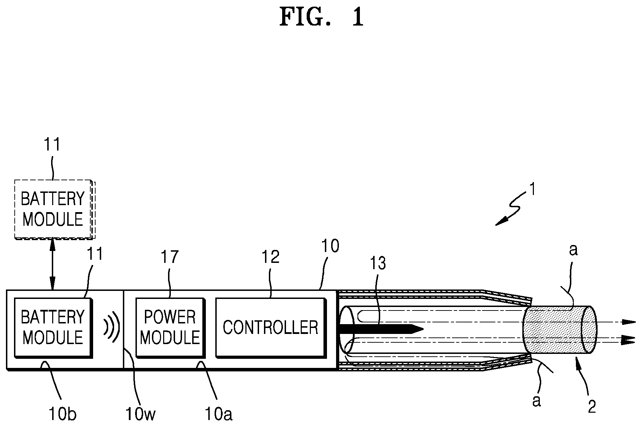

FIG. 1 is a conceptual diagram schematically illustrating an aerosol-generating device related to an embodiment.

An aerosol-generating device 1 related to an embodiment shown in FIG. 1 includes a main body 10, a heater 13 arranged in the main body 10 and configured to generate aerosols when power is supplied, a power module 17 arranged in the main body 10 and configured to supply power to the heater 13, and a battery module 11 removably mounted in the main body 10 and configured to wirelessly transmit power to the power module 17. The heater 13 is an example of an aerosol generator.

The main body 10 includes an internal space 10a accommodating components, such as the heater 13, a controller 12, the power module 17, or the like, and a mounting space 10b in which the battery module 11 may be mounted. The internal space 10a and the mounting space 10b are separated from each other by a partition wall 10w. The partition wall 10w seals between the internal space 10a and the mounting space 10b. Because the internal space 10a and the mounting space 10b are blocked from each other by the partition wall 10w, no material passes between the mounting space 10b and the internal space 10a.

The battery module 11 is removably mounted in the mounting space 10b of the main body 10. 'Being removably mounted' may mean that the battery module 11 is mounted in the mounting space 10b as shown by the solid line in FIG. 1, and then the battery module 11 may be removed from the mounting space 10b as shown by the dotted line in FIG. 1 to discard the battery module 11 or replace the battery module 11.

In a state in which the battery module 11 is mounted in the mounting space 10b, the battery module 11 may be stably maintained in the mounting space 10b. To maintain the battery module 11 in the mounting space 10b, the main body 10 may include a support structure configured to support the battery module 11. For example, the main body 10 may include a battery cover that presses the battery module 11 so that the battery module 11 mounted in the mounting space 10b does not fall out of the mounting space 10b.

The battery module 11 mounted in the mounting space 10b may wirelessly supply power to the power module 17. The battery module 11 may wirelessly supply power to the power module 17 by using, for example, a wireless method, such as a magnetic induction method, a magnetic resonance method, or an electromagnetic wave method. An operation of the battery module 11, by which the battery module 11 wirelessly supplies power to the power module 17, corresponds to a ' transmission mode.'

As an additional operating method, the battery module 11 may operate to charge power by receiving power from an external wireless charging device (not shown). An operation of the battery module 11 to charge power corresponds to a 'charging mode.'

The power module 17 may supply power to the heater 13 by wirelessly receiving power from the battery module 11. The power module 17 may include a wireless power reception circuit configured to wirelessly receive power from the battery module 11, and a power conversion circuit configured to convert a voltage and/or power to wirelessly supply power to the heater 13.

A portion of a cigarette 2 may be inserted into the interior of the aerosol-generating device 1, and a remaining portion of the cigarette 2 may be exposed to the outside of the aerosol-generating device 1. When the cigarette 2 is inserted into the aerosol-generating device 1, the aerosol-generating device 1 may generate aerosols by operating the heater 13.

When a user starts an inhalation motion, aerosols are generated from the cigarette 2 in a process in which external air a is introduced into the interior of the aerosol-generating device 1 and passes through the cigarette 2. The aerosols generated from the cigarette 2 are delivered to the user. The user may inhale the aerosols while biting an end portion of the cigarette 2 with his/her mouth.

### Mode for the Invention

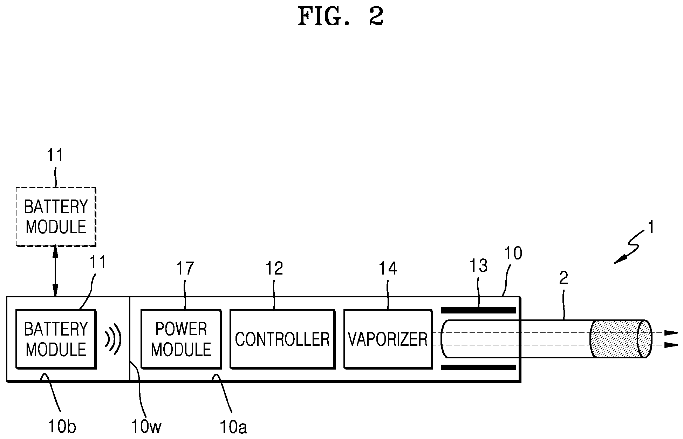

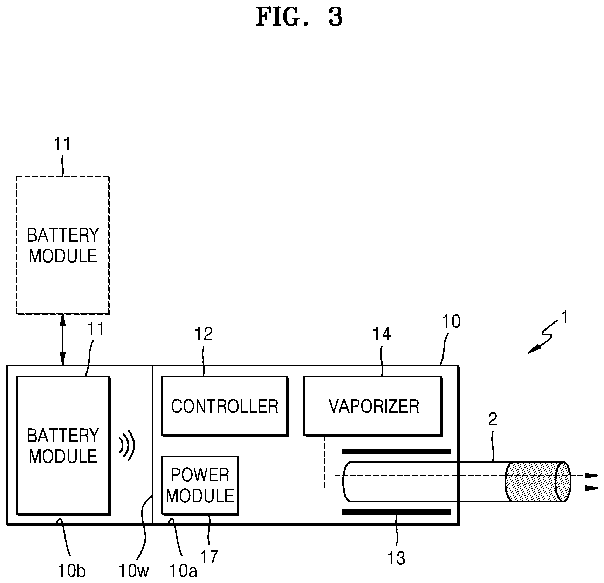

FIGS. 2 and 3 are conceptual diagrams schematically illustrating aerosol-generating devices related to different embodiments.

The aerosol-generating device 1 related to the embodiments shown in FIGS. 2 and 3 includes a main body 10, a vaporizer 14 and a heater 13, which are arranged in the main body 10 and configured to generate aerosols, a power module 17 configured to supply power to the vaporizer 14 and the heater 13, and a battery module 11 removably mounted in the main body 10 and configured to wirelessly transmit power to the power module 17. The heater 13 and the vaporizer 14 are other examples of the aerosol generator.

The battery module 11 may wirelessly supply power to the power module 17. The power module 17 receiving power from the battery module 11 may supply power to at least one of the vaporizer 14 and the heater 13 to perform an operation by which at least one of the vaporizer 14 and the heater 13 generates aerosols.

The cigarette 2 may be inserted into the internal space of the aerosol-generating device 1. When the cigarette 2 is inserted into the aerosol-generating device 1, the aerosol-generating device 1 may generate aerosols by operating the heater 13 and/or the vaporizer 14. The aerosols generated by the heater 13 and/or the vaporizer 14 are delivered to the user by passing through the cigarette 2.

In the aerosol-generating device 1 related to the embodiments shown in FIGS. 1 through 3, the battery module 11 may be removably mounted in the main body 10.

According to the aerosol-generating device related to the above-described embodiments, there is no need to install an electrical terminal for a battery in the main body 10 to transmit power of the battery module 11 to components of the main body 10, and thus the configuration of the aerosol-generating device may be simplified.

Also, because there is no need to install the electrical terminal for a battery in the main body 10, the mounting space 10b of the battery module 11 and the internal space 10a of the main body 10 may be completely separated. Accordingly, foreign materials or moisture may be prevented from flowing into the interior of the aerosol-generating device from the outside, and residual materials, such as liquid generated in the aerosol-generating device, may be prevented from leaking into the battery module 11.

The battery module 11 supplies power used for the aerosol-generating device 1 to operate. For example, the battery module 11 may supply power to at least one of the heater 13 and the vaporizer 14 so that at least one of the heater 13 and the vaporizer 14 may perform a heating operation. Also, the battery module 11 may supply power used for the controller 12 to operate. In addition, the battery module 11 may supply power for operations of a display, a sensor, a motor, or the like mounted in the aerosol-generating device 1.

The controller 12 generally controls operations of the aerosol-generating device 1. In detail, the controller 12 controls not only operations of the battery module 11, the heater 13 and the vaporizer 14, but also operations of other components included in the aerosol-generating device 1. Also, the controller 12 may check a state of each of the components of the aerosol-generating device 1 to determine whether or not the aerosol-generating device 1 is able to operate.

The heater 13 may be heated by the power supplied from the battery module 11. For example, when the cigarette 2 is inserted into the aerosol-generating device 1, the heater 13 may be positioned outside the cigarette 2. Thus, the heated heater 13 may increase the temperature of an aerosol generating material within the cigarette 2.

The vaporizer 14 may generate aerosols by heating a liquid composition, and the generated aerosols may be delivered to the user by passing through the cigarette 2. In other words, the aerosols generated by the vaporizer 14 may move along an air flow passage of the aerosol-generating device 1, and the air flow passage may be configured so that the aerosols generated by the vaporizer 14 pass through the cigarette 2 to be delivered to the user.

For example, the vaporizer 14 may include a liquid storage unit, a liquid delivery element, and a heating element, but is not limited thereto. For example, the liquid storage unit, the liquid delivery element, and the heating element may also be included in the aerosol-generating device 1 as independent modules.

For example, the vaporizer 14 may be referred to as a cartomizer or an atomizer, but is not limited thereto.

Although not illustrated in FIGS. 1 through 3, the aerosol-generating device 1 and an additional cradle may form together a system. For example, the cradle may be used to charge the battery module 11 of the aerosol-generating device 1. Alternatively, the heater 13 may be heated when the cradle and the aerosol-generating device 1 are coupled to each other.

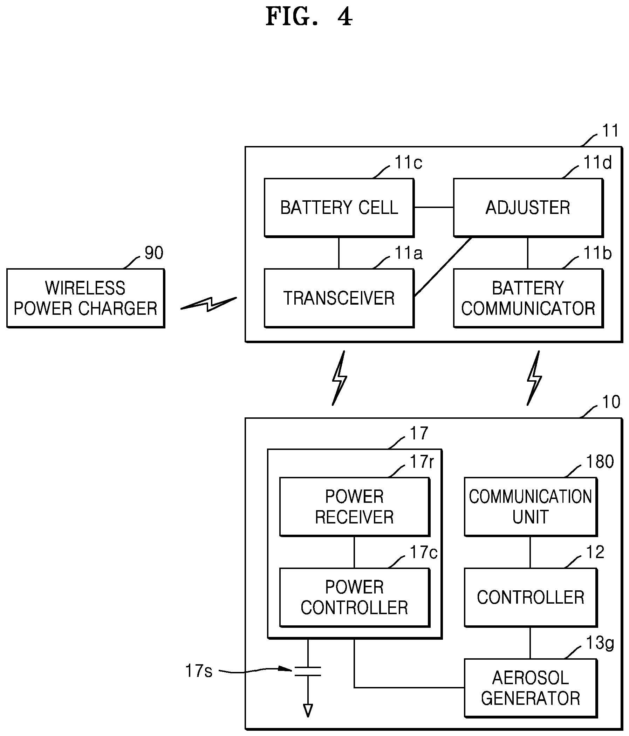

FIG. 4 is a block diagram schematically illustrating components of an aerosol-generating device related to another embodiment.

The aerosol-generating device related to the embodiment shown in FIG. 4 includes a main body 10 configured to accommodate components, such as a controller 12, a communication unit 180, a power module 17, an aerosol generator 13g, or the like, and a battery module 11 removably mounted in the main body 10.

The battery module 11 includes a battery cell 11c configured to be charged with power, a transceiver 11a configured to operate in a charging mode to charge power to the battery cell 11c and a transmission mode to wirelessly transmit power of the battery cell 11c to the outside, and an adjuster 11d configured to generate signals to operate the transceiver 11a.

The battery cell 11c may include a secondary battery configured to charge electrical energy or discharge electrical energy. The battery cell 11c may further include a protection circuit module configured to protect the secondary battery.

The transceiver 11a may operate in the charging mode to wirelessly receive power from an external wireless power charger 90 and charge the battery cell 11c with the received power. Also, the transceiver 11a may operate in the transmission mode to wirelessly transmit power stored in the battery cell 11c to the power module 17.

The adjuster 11d may generate a signal to select an operation mode of the transceiver 11a and transmit the signal to the transceiver 11a. The transceiver 11a may operate in either the charging mode or the transmission mode, based on the signal transmitted from the adjuster 11d.

The main body 10 includes a capacitor 17s used to back up power for a starting operation of the aerosol-generating device. The capacitor 17s may be, for example, a super capacitor. The capacitor 17s may store a portion of power supplied to the power module 17 from the battery module 11.

Compared to the battery module 11 configured to store a large amount of power, the capacitor 17s stores a small amount of power. Accordingly, the capacitor 17s is difficult to use for driving the aerosol generator 13g. The capacitor 17s may perform a function to assist the starting operation (or wake-up operation) of the controller 12, the communication unit 180, and the power module 17 of the aerosol-generating device.

The main body 10 may include the communication unit 180 configured to transmit wireless signal for communication with the battery module 11. The battery module 11 may include a battery communicator 11b configured to be connected to the communication unit 180 of the main body 10 via wireless communication.

The starting operation of the aerosol-generating device may be performed while the battery module 11 is mounted in the main body 10. The controller 12, the communication unit 180, and the power module 17 of the main body 10 may start operations by power of the capacitor 17s. For example, as the communication unit 180 of the main body 10 transmits a wireless signal (a signal for aerosol generation) to the battery communicator 11b of the battery module 11, the transmission mode of the battery module 11 may be initiated.

As another operation example, the battery communicator 11b may drive the adjuster 11d based on a wireless signal (a signal for wireless charging) transmitted from the communication unit 180 of the main body 10. That is, when the adjuster 11d is driven by the battery communicator 11b and the adjuster 11d transmits a signal to the transceiver 11a, the transceiver 11a may operate in the charging mode to charge power to the battery cell 11c.

The power module 17 includes a power receiver 17r configured to wirelessly receive power from the transceiver 11a of the battery module 11, and a power controller 17c configured to control an operation of the power receiver 17r and convert the power received by the power receiver 17r and supply the converted power to the aerosol generator 13g, the controller 12, and the communication unit 180.

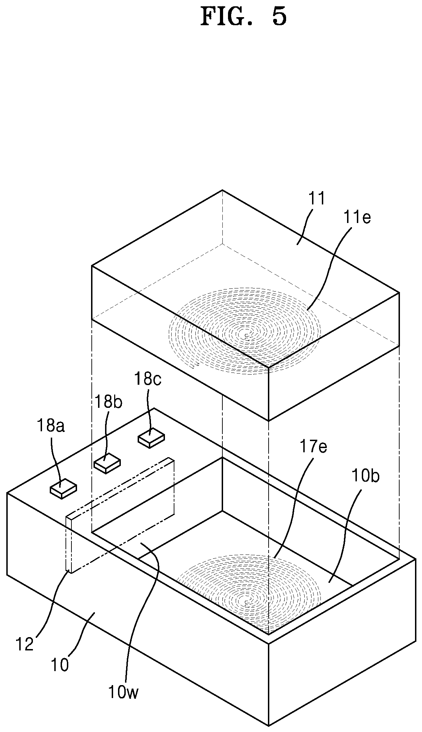

FIG. 5 is a schematic perspective view of the aerosol-generating device related to the embodiment shown in FIG. 4.

The main body 10 of the aerosol-generating device includes the mounting space 10b in which the battery module 11 may be mounted. The main body 10 includes an internal space in which the controller 12 is accommodated. The internal space and the mounting space 10b of the main body 10 are separated from each other by the partition wall 10w.

The main body 10 includes a main body antenna circuit 17e configured to wirelessly transmit power. The main body antenna circuit 17e may be a part of the power receiver 17r of FIG. 4. The main body antenna circuit 17e is arranged to face the mounting space 10b.

The battery module 11 includes an antenna circuit 11e configured to wirelessly transmit power to the main body antenna circuit 17e or to wirelessly receive power from an external wireless power charger. When the battery module 11 is arranged in the mounting space 10b, the antenna circuit 11e may be positioned to correspond to the main body antenna circuit 17e.

According to the aerosol-generating device related to the above-described embodiments, there is no need to install an electrical terminal for a battery in the main body 10 to transmit power of the battery module 11 to the components of the main body 10, and thus the configuration of the aerosol-generating device may be simplified.

Also, because there is no need to install the electrical terminal for a battery in the main body 10, the mounting space 10b of the battery module 11 and the internal space of the main body 10 may be completely separated. Accordingly, foreign materials or moisture may be prevented from flowing into the interior of the aerosol-generating device from the outside, and residual materials, such as liquid generated in the aerosol-generating device, may be prevented from leaking into the battery module 11.

The main body 10 may include user switches 18a, 18b, and 18c for operations of the aerosol-generating device. The user may control the operations of the aerosol-generating device by manipulating the user switches 18a, 18b, and 18c.

For example, when the user manipulates a first switch 18a while the battery module 11 is mounted in the main body 10, the starting operation of the aerosol-generating device may be initiated, and the communication unit 180 of FIG. 4 may transmit, to the battery communicator 11b of the battery module 11, a wireless signal to request wireless power transmission.

As another example, when the user manipulates a second switch 18b, the aerosol-generating device may stop an aerosol-generating operation.

As another example, when the user manipulates a third switch 18c, the aerosol-generating device may stop the aerosol-generating operation, and the communication unit 180 of FIG. 4 may transmit, to the battery communicator 11b of the battery module 11, a wireless signal to cause the battery module 11 to start a charging operation.

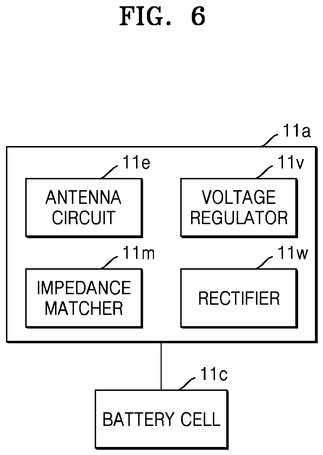

FIG. 6 is a block diagram schematically illustrating components of a transceiver of the aerosol-generating device related to the embodiment shown in FIG. 4.

The transceiver 11a may be implemented to operate in any one wireless method, such as a magnetic induction method, a magnetic resonance method, or an electromagnetic wave method.

The transceiver 11a may include the antenna circuit 11e configured to wirelessly receive power or wirelessly transmit power, and a voltage regulator 11v arranged between the battery cell 11c and the antenna circuit 11e and configured to regulate a voltage. When the transceiver 11a operates in the transmission mode, the voltage regulator 11v may supply power to the antenna circuit 11e by increasing an output voltage of the battery cell 11c. Also, when the transceiver 11a operates in the charging mode, the voltage regulator 11v may charge the battery cell 11c by decreasing the voltage of power wirelessly received by the antenna circuit 11e.

Also, the transceiver 11a may include a rectifier 11w configured to convert alternating current power into direct current power or to convert direct current power to alternating current power. For example, when the transceiver 11a operates in the transmission mode, the rectifier 11w may supply power to the antenna circuit 11e by converting the voltage of direct current of which the voltage is increased by the voltage regulator 11v into the voltage of alternating current. Also, when the transceiver 11a operates in the charging mode, the rectifier 11w may convert power of alternating current wirelessly received by the antenna circuit 11e into power of direct current and supply the converted power to the voltage regulator 11v.

In addition, the transceiver 11a may include an impedance matcher 11m. The impedance matcher 11m may be arranged between the voltage regulator 11v and the antenna circuit 11e and perform a function of matching the impedance of the voltage regulator 11v with the impedance of the antenna circuit 11e.

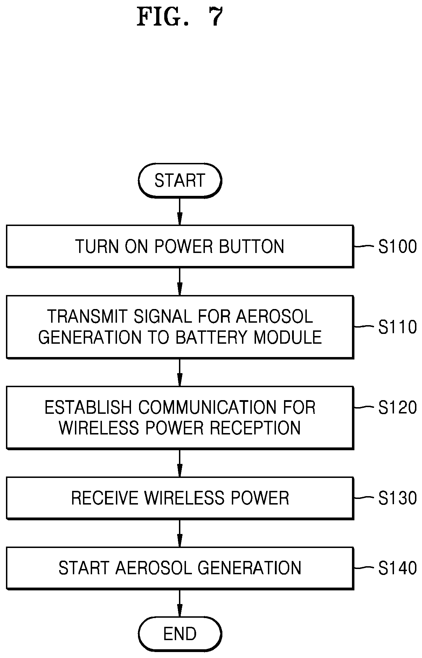

FIG. 7 is a flowchart illustrating a power receiving operation of the aerosol-generating device related to the embodiments shown in FIGS. 4 to 6.

When a power button (or power switch) of the aerosol-generating device is turned on by the user, the starting operation of the aerosol-generating device is initiated (S100).

A method of initiating the starting operation of the aerosol-generating device is not limited to the example in which the power button is turned on. As another example, when a battery module is mounted in the main body of the aerosol-generating device, the aerosol-generating device may sense the mounting status of the battery module, and thus the starting operation of the aerosol-generating device may be initiated. To this end, the aerosol-generating device may include, in the main body, a sensor configured to sense the mounting of a battery module.

When the starting operation of the aerosol-generating device is initiated, a communication unit of the main body of the aerosol-generating device transmits, to a battery communicator of the battery module, a signal for aerosol generation (S110). The 'signal for aerosol generation' is a wireless signal transmitted to the battery communicator from the communication unit of the main body, and is a wireless signal that requests the battery module to supply power to the main body.

The battery module may operate in the transmission mode to wirelessly supply power to a power module of the main body, based on the wireless signal transmitted to the battery communicator from the communication unit of the main body. When the battery module operates in the transmission mode, a communication establishing operation for wireless power reception is performed between the battery communicator of the battery module and the communication unit of the main body (S120).

The communication establishing operation for wireless power reception may be, for example, an operation by which a controller of the main body verifies authentication information transmitted from the battery module and allows wireless power reception. The operation of verifying authentication information may be, for example, an operation by which the controller compares the authentication information transmitted from the battery module with identification information previously held by the aerosol-generating device to verify that the battery module corresponds to an authenticated battery (genuine battery).

After the establishment of communication for wireless power reception is completed, a wireless power reception operation by which a power module of the main body wirelessly receives power from the battery module is performed (S130).

When the wireless power reception operation is performed and power of the battery module is supplied to the power module, power is supplied to an aerosol generator by the power module, and the aerosol generator starts generating aerosols (S140).

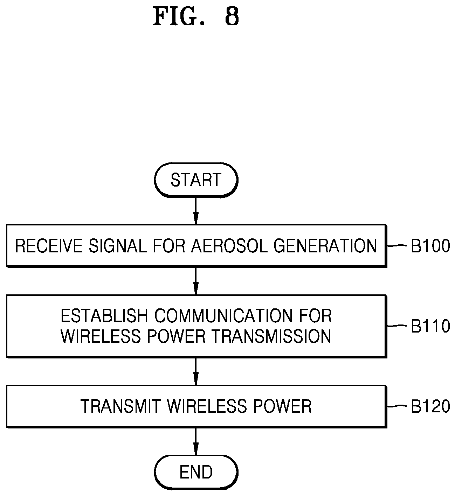

FIG. 8 is a flowchart illustrating a power transmitting operation of a battery module of the aerosol-generating device related to the embodiments shown in FIGS. 4 to 7. FIG. 8 shows an operation of the battery module in conjunction with an operation of the main body of the aerosol-generating device shown in FIG. 7.

When the battery module receives a 'signal for aerosol generation' from the communication unit of the main body of the aerosol-generating device (B100), the battery communicator of the battery module establishes communication for wireless power transmission with the communication unit of the main body (B110). The communication for wireless power transmission may be an operation by which the battery communicator transmits authentication information of the battery module to the communication unit of the main body to verify whether the battery module corresponds to a genuine product that may be used for an operation of the aerosol-generating device.

After the establishment of the communication for wireless power transmission, an operation by which a transceiver of the battery module wirelessly transmits power to the power module of the main body is performed (B120).

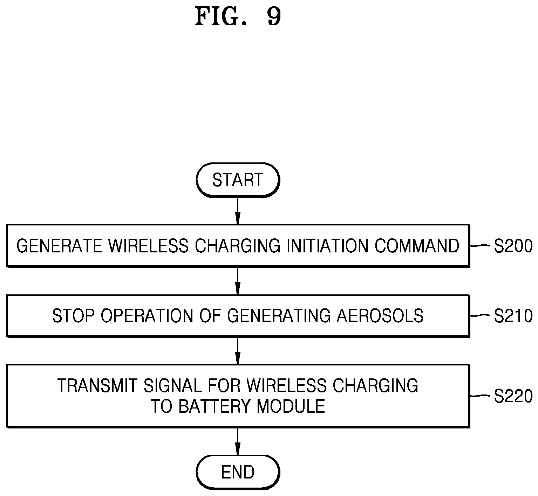

FIG. 9 is a flowchart illustrating a wireless charging operation of the aerosol-generating device related to the embodiments shown in FIGS. 4 to 8.

As shown in FIGS. 7 and 8, while the aerosol-generating device is operating by power wirelessly supplied from the battery module to perform an operation of generating aerosols, a wireless charging initiation command requesting wireless charging to be performed may be generated (S200).

While the battery module is operating in the charging mode to charge power of the battery module by wirelessly receiving power from an external wireless power charger, the battery module may not supply power to the power module of the main body, and thus an operation by which the aerosol generator generates aerosols must stop. Accordingly, the 'wireless charging initiation command' may be a signal to stop the operation of the aerosol generator when the battery module is operating in the charging mode.

The 'wireless charging initiation command' may be a command generated by the controller in response to a signal generated when the user manipulates a switch of the main body, as shown in FIG. 5. When the controller generates a wireless charging initiation command, the aerosol generator may stop the operation of generating aerosols (S210).

Embodiments are not limited by the method in which the 'wireless charging initiation command' is generated. For example, when the capacity of power charged in the battery module is at the minimum power capacity preset in the aerosol-generating device or less, the controller may automatically generate a 'wireless charging initiation command'.

As another example, when the aerosol-generating device approaches an external wireless power charger and the battery module or the communication unit of the main body senses the external wireless power charger, the controller of the main body or the battery communicator of the battery module may automatically generate a 'wireless charging initiation command'.

After the operation of generating aerosols is stopped, the communication unit of the main body performs an operation of transmitting a signal for wireless charging to the battery communicator of the battery module (S220).

The 'signal for wireless charging' may be a signal requesting the transceiver of the battery module to operate in the charging mode to charge power to the battery cell.

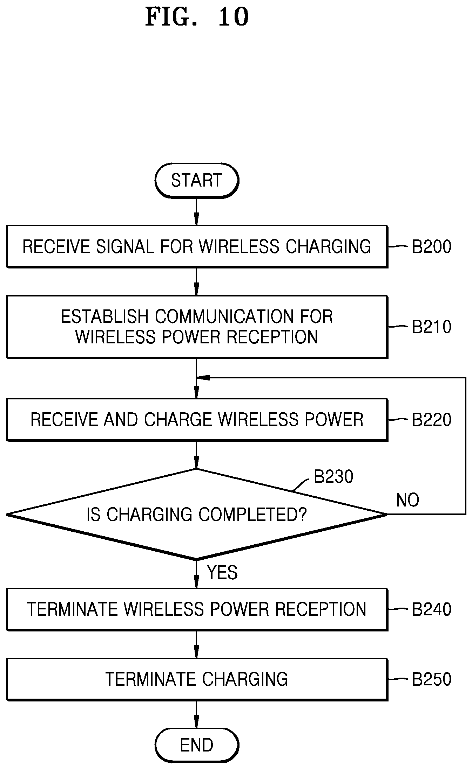

FIG. 10 is a flowchart illustrating a wireless charging operation of a battery module of the aerosol-generating device related to the embodiments shown in FIGS. 4 to 9. FIG. 10 shows an operation of the battery module in conjunction with an operation of the main body of the aerosol-generating device shown in FIG. 9.

When the battery module receives a 'signal for wireless charging' from the communication unit of the main body of the aerosol-generating device (B200), the battery communicator of the battery module establishes communication for wireless power reception with an external wireless power charger (B210). The communication for wireless power reception may be an operation by which the battery communicator transmits authentication information of the battery module to the wireless power charger to verify whether the battery module corresponds to a genuine product that may be charged via a wireless charging operation.

After the communication for wireless power reception is established, a transceiver of the battery module wirelessly receives power from the external wireless power charger, and this an operation of charging power to a battery cell is performed (B220).

An operation of checking whether power charging of the battery cell of the battery module is completed is performed (B230), and when the power charging of the battery cell is completed, an operation by which the transceiver of the battery module wirelessly receives power from the wireless power charger is terminated (B240). After the operation of wirelessly receiving power is terminated, or at the same time as the termination of the operation of wirelessly receiving power, the charging operation of charging power of the battery cell is terminated (B250).

According to the aerosol-generating device related to the above-described embodiments, power of the battery module may be wirelessly supplied to the main body of the aerosol-generating device. Also, the battery module may wirelessly charge power from an external wireless power charger. Accordingly, there is no need to install a battery terminal for electrical connection between the battery module and the main body. Also, there is no need to install, in the aerosol-generating device, a terminal for charging to charge the battery module.

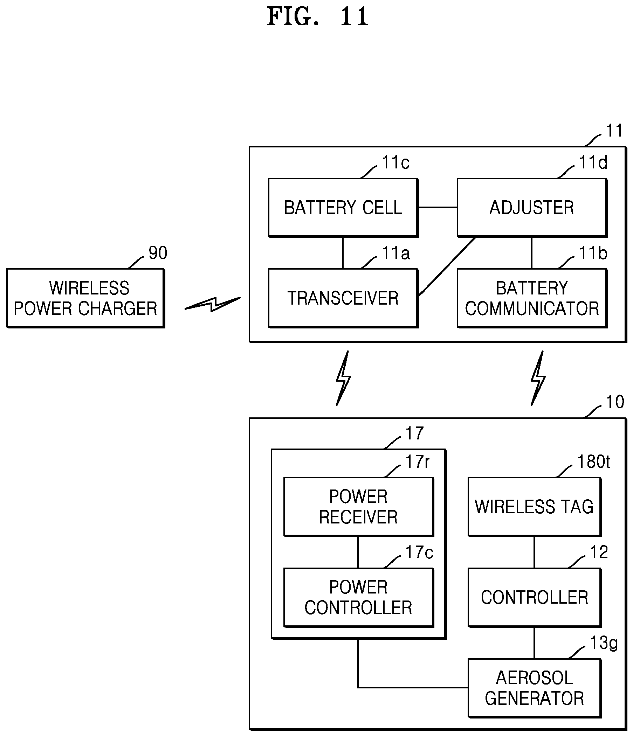

FIG. 11 is a block diagram schematically illustrating components of an aerosol-generating device related to another embodiment.

The configuration of the aerosol-generating device related to the embodiment shown in FIG. 11 is the same as the configuration of the aerosol-generating device related to the embodiment shown in FIG. 4. The aerosol-generating device related to the embodiment shown in FIG. 11 does not include a capacitor and includes a wireless tag 180t for wireless communication with the battery communicator 11b of the battery module 11.

The battery communicator 11b of the battery module 11 may, for example, read information from the wireless tag 180t, based on a protocol of short-range communication. The wireless tag 180t may be a radio frequency identification (RFID) tag, for example, a near-field communication (NFC) tag.

Embodiments are not limited by the implementation method of the wireless tag 180t, and the wireless tag 180t may be implemented to utilize short-range communication technologies such as Bluetooth, Wi-Fi, and Zigbee. When the wireless tag 180t requires its own power, the aerosol-generating device may be modified to include a capacitor as in the embodiment shown in FIG. 4.

When the battery module 11 is mounted in the main body 10, the battery communicator 11b of the battery module 11 may identify the wireless tag 180t of the main body 10, and the starting operation of the aerosol-generating device may be performed.

The battery communicator 11b may identify the wireless tag 180t of the main body 10, and the battery communicator 11b may determine that the battery module 11 is in a state capable of supplying power to the power module 17 of the aerosol-generating device.

The battery communicator 11b of the battery module 11 may drive the adjuster 11d, based on an identification result of the wireless tag 180t. The adjuster 11d may transmit a signal to the transceiver 11a, and the transceiver 11a may operate in a transmission mode of wirelessly supplying power to the power module 17 of the main body 10.

As power is supplied to the power module 17 of the aerosol-generating device by the battery module 11, the aerosol generator 13g may generate aerosols.

While the aerosol generator 13g is generating aerosols, the user may stop the operation of generating aerosols by manipulating a switch of the aerosol-generating device.

Also, as the user manipulates the switch of the aerosol-generating device, the operation by which the aerosol-generating device generates aerosols may be stopped, and an operation of charging power of the battery module 11 may be performed.

According to the aerosol-generating device related to the above-described embodiments, there is no need to install a battery terminal for electrical connection between the battery module 11 and the main body 10, and there is no need to install, in the main body 10, a terminal for charging to charge power of the battery module 11.

In addition, even when the main body 10 does not include a capacitor for power retention, the battery module 11 may automatically perform an operation (starting operation) by which the battery module 11 wirelessly supplies power to the main body 10 by identifying the wireless tag 180t.

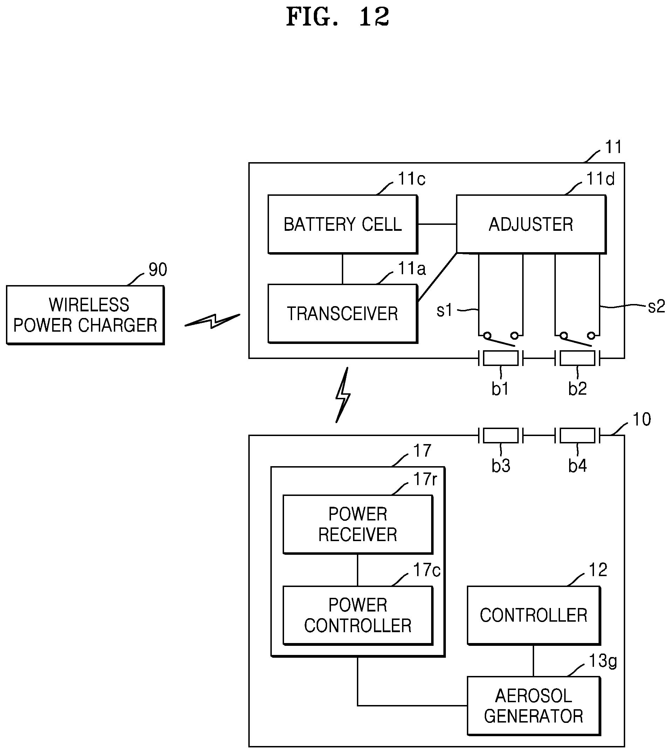

FIG. 12 is a block diagram schematically illustrating components of an aerosol-generating device related to another embodiment.

The configuration of the aerosol-generating device related to the embodiment shown in FIG. 12 is the same as the configuration of the aerosol-generating device related to the embodiment shown in FIG. 4. The aerosol-generating device related to the embodiment shown in FIG. 12 does not include a capacitor, the battery module 11 includes switches s1 and s2 and buttons b1 and b2, and the main body 10 includes buttons b3 and b4.

The switches s1 and s2 of the battery module 11 are connected to the adjuster 11d. According to an operation of the switches s1 and s2, the adjuster 11d may generate a signal, so that the transceiver 11a may operate in a transmission mode or a charging mode.

When the battery module 11 is mounted in the main body 10, the buttons b3 and b4 of the main body 10 and the buttons b1 and b2 of the battery module 11 are in a state of being in contact with each other. For example, the buttons b3 and b4 of the main body 10 may be manipulated by the user.

As any one of the buttons b3 and b4 of the main body 10, which is manipulated by the user, presses the buttons b1 and b2 of the battery module 11, the switches s1 and s2 corresponding to the pressed buttons b1 and b2 operate.

For example, when the user presses a first button b3, a first switch s1 operates by the button b1 of the battery module 11, so that the transceiver 11a may operate in a transmission mode by the adjuster 11d. As another example, when a second switch s2 operates, the transceiver 11a may operate in a charging mode by the adjuster 11d.

The adjuster 11d of the battery module 11 may transmit a signal to the transceiver 11a, and the transceiver 11a may operate in a transmission mode of wirelessly supplying power to the power module 17 of the main body 10. As power is supplied to the power module 17 of the aerosol-generating device by the battery module 11, the aerosol generator 13g may generate aerosols.

As another operation example, when the user presses a second button b4 of the aerosol-generating device while the aerosol generator 13g is generating aerosols, the operation by which the aerosol-generating device generates aerosols may be stopped, and the second switch s2 operates by the button b2 of the battery module 11, so that the transceiver 11a may operate in a charging mode by the adjuster 11d.

According to the aerosol-generating device related to the above-described embodiments, there is no need to install a battery terminal for electrical connection between the battery module 11 and the main body 10, and there is no need to install, in the main body 10, a terminal for charging to charge power of the battery module 11.

Also, even when the main body 10 does not include a capacitor for power retention, when the buttons b3 and b4 of the main body 10 are manipulated, the battery module 11 may automatically perform an operation (starting operation) of wirelessly supplying power to the main body 10.

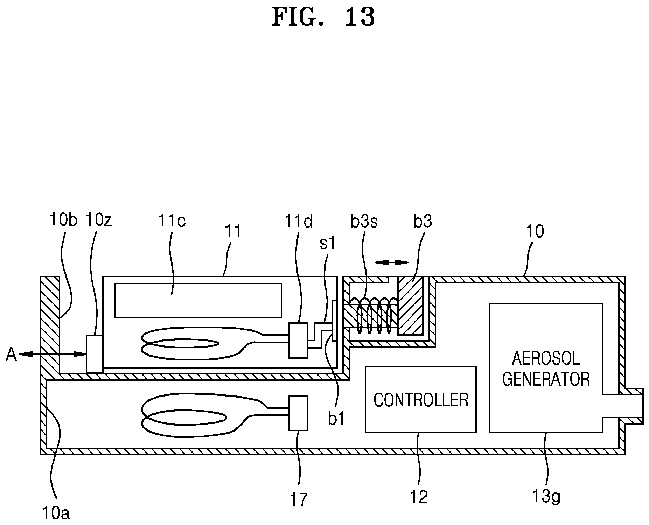

FIG. 13 is a schematic cross-sectional view of the aerosol-generating device related to the embodiment shown in FIG. 12.

FIG. 13 shows examples of a structure in which the button b3 arranged in the main body 10 and the button b1 arranged in the battery module 11 are in contact with each other in the aerosol-generating device, and a particular structure in which a switch s1 operates by the button b1.

The main body 10 includes an internal space 10a in which the controller 12, the aerosol generator 13g, and the power module 17 are arranged, and a mounting space 10b in which the battery module 11 is mounted. The internal space 10a and the mounting space 10b are completely separated, so that no material may move between the internal space 10a and the mounting space 10b.

The button b3 of the main body 10 is positioned in an area separated from the internal space 10a. The button b3 of the main body 10 is installed to be movable in the main body 10. The button b3 is elastically supported relative to the main body 10 by an elastic member b3s. As the user presses the button b3, a protrusion of the button b3 may protrude toward the battery module 11 to contact the button b1 of the battery module 11.

When the button b3 of the main body 10 is in contact with the button b1 of the battery module 11, the switch s1 operates to drive the adjuster 11d. According to the operation of the switch s1, the adjuster 11d may generate a signal, so that a transceiver of the battery module 11 may operate in a transmission mode or a charging mode.

When the battery module 11 is mounted in the mounting space 10b of the main body 10, the center of an antenna module of the battery module 11 should be aligned with the center of an antenna module of the main body 10. The main body 10 may include a position adjuster 10z configured to adjust the position of the battery module 11.

The position adjuster 10z may move in the mounting space 10b of the main body 10 along a direction of an arrow A. The position adjuster 10z may change the position of the battery module 11 in the mounting space 10b of the main body 10, so that the center of the antenna module of the battery module 11 and the center of the antenna module of the main body 10 may align with each other.

The arrangement structure and number of the position adjuster 10z shown in FIG. 13 are examples, and the number and arrangement structure of the position adjuster 10z may be modified in various ways. For example, in FIG. 13, the position adjuster 10z may arranged on each of both sides of left and right directions of the battery module 11. As another example, the position adjuster 10z may be arranged to move in a direction (a direction perpendicular to the ground surface of FIG. 13) transverse to a direction in which the battery module 11 and the main body 10 of FIG. 13 extend.

As such, according to the position adjuster 10z, the battery module 11 may be mounted in the main body 10 even when the size of the battery module 11 does not exactly align with the mounting space 10b of the main body 10 of the aerosol-generating device. Also, when the battery modules 11 having various sizes are used in the aerosol-generating device, the wireless power transmission/reception efficiency may be increased by aligning the centers of the battery module 11 and the main body 10.

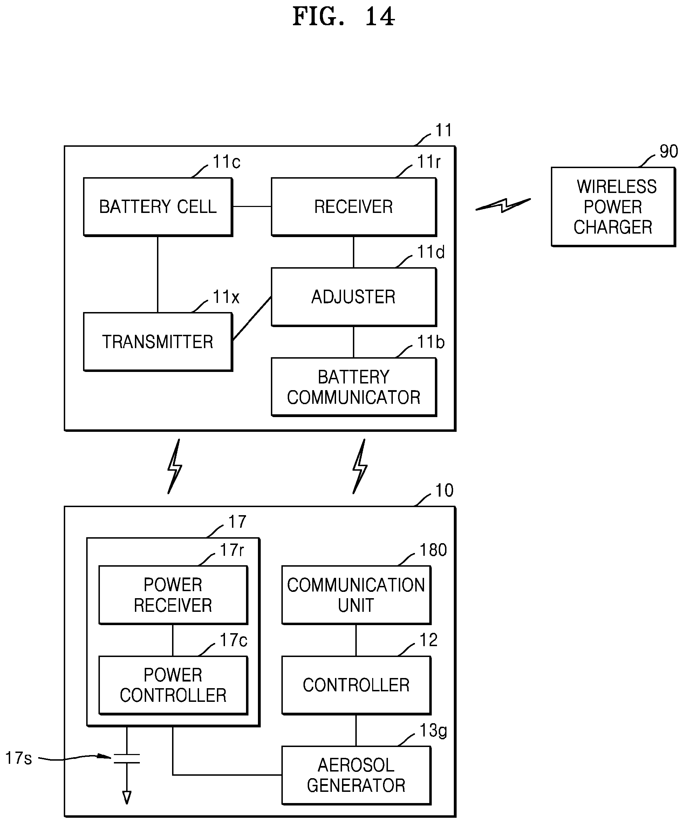

FIG. 14 is a block diagram schematically illustrating components of an aerosol-generating device related to another embodiment. The configuration of the aerosol-generating device related to the embodiment shown in FIG. 14 is the same as the configuration of the aerosol-generating device related to the embodiment shown in FIG. 4, but the configuration of the battery module 11 is changed.

In the aerosol-generating device related to the embodiment shown in FIG. 4, one transceiver operates in a transmission mode or a charging mode, but in the aerosol-generating device related to the embodiment shown in FIG. 14, a transmission mode is performed by a transmitter 11x, and a charging mode is performed by a receiver 11r.

In the aerosol-generating device related to the embodiment shown in FIG. 14, the battery module 11 includes the battery cell 11c may be charged with power, the receiver 11r configured to charge power to the battery cell 11c by wirelessly receiving power, the transmitter 11x configured to wirelessly transmit power of the battery cell 11c to the power module 17, and the adjuster 11d configured to generate a signal to select the transmission mode in which the transmitter 11x operates or the charging mode in which the receiver 11r operates.

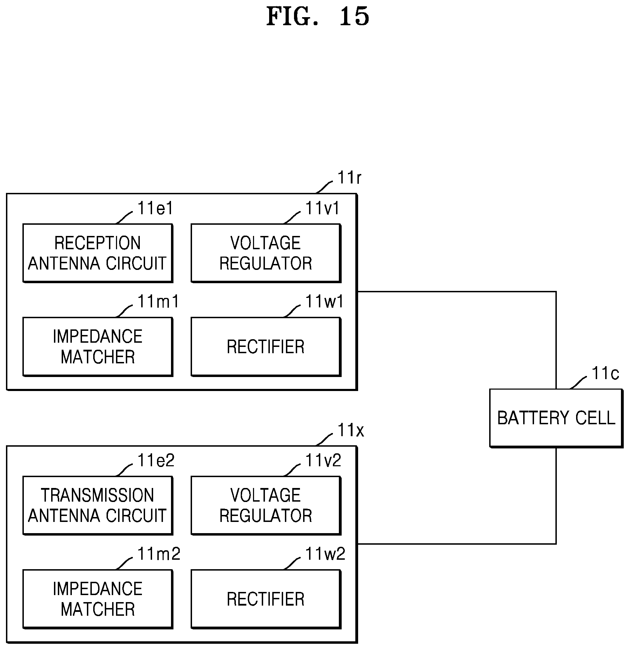

FIG. 15 is a block diagram schematically illustrating some components of the aerosol-generating device related to the embodiments shown in FIGS. 12 and 14.

The receiver 11r includes a reception antenna circuit 11e1, a rectifier 11wl arranged between the reception antenna circuit 11el and the battery cell 11c and configured to convert alternating current power into direct current power, a voltage regulator 11v1 configured to regulate a voltage, and an impedance matcher 11m1 configured to perform an impedance matching function.

The transmitter 11x includes a transmission antenna circuit 11e2, a rectifier 11w2 arranged between the transmission antenna circuit 11e2 and the battery cell 11c and configured to convert direct current power into alternating current power, a voltage regulator 11v2 configured to regulate a voltage, and an impedance matcher 11m2 configured to perform an impedance matching function.

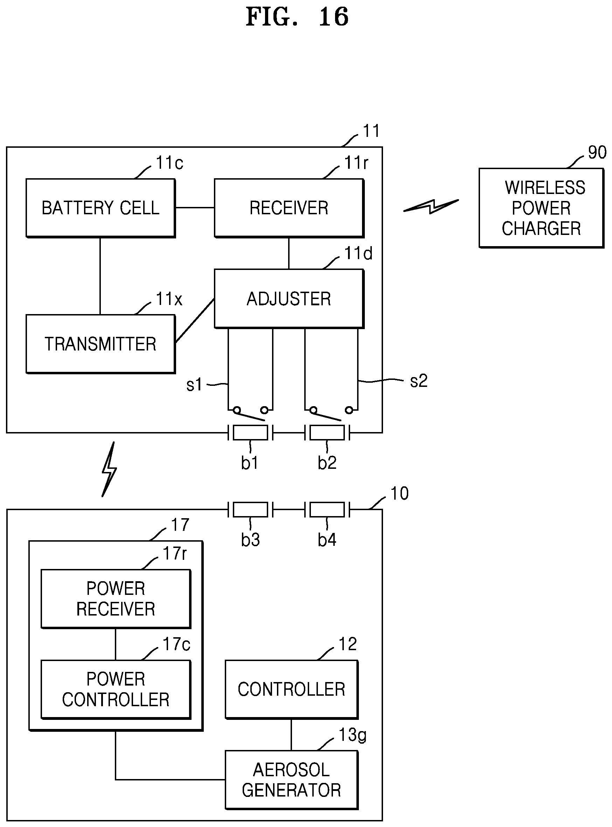

FIG. 16 is a block diagram schematically illustrating components of an aerosol-generating device related to another embodiment.

The configuration of the aerosol-generating device related to the embodiment shown in FIG. 16 is almost the same as the configuration of the aerosol-generating device related to the embodiment shown in FIG. 15. The aerosol-generating device related to the embodiment shown in FIG. 16 does not include a capacitor, the battery module 11 includes switches s1 and s2 and buttons b1 and b2, and the main body 10 includes buttons b3 and b4.

When the battery module 11 is mounted in the main body 10, the buttons b3 and b4 of the main body 10 and the buttons b1 and b2 of the battery module 11 are in a state of being in contact with each other. For example, the buttons b3 and b4 of the main body 10 may be manipulated by the user.

As any one of the buttons b3 and b4 of the main body 10, which is manipulated by the user, presses the buttons b1 and b2 of the battery module 11, the switches s1 and s2 corresponding to the pressed buttons b1 and b2 operate. For example, when a first switch s1 operates, the transmitter 11x may operate by the adjuster 11d, so that a transmission mode in which the transmitter 11x wirelessly supplies power of the battery cell 11c to the power module 17 of the main body 10 may be performed.

As another example, when a second switch s2, the receiver 11r may operate by the adjuster 11d, so that a charging mode in which the receiver 11r wirelessly receives power from an external wireless power charger 90 and charges power of the battery cell 11c may be performed.

When the user manipulates the button b1 of the aerosol-generating device, the adjuster 11d of the battery module 11 transmits a signal to the transmitter 11x, so that a transmission mode in which the transmitter 11x wirelessly supplies power to the power module 17 of the main body 10 is performed. According to the transmission mode, power of the battery module 11 may be wirelessly supplied to the power module 17 of the aerosol-generating device, so that the aerosol generator 13g may generate aerosols.

When the user manipulates the button b2 of the aerosol-generating device while the aerosol generator 13g is generating aerosols, the operation by which the aerosol-generating device generates aerosols may be stopped, and a charging mode in which the battery module 11 charges power may be performed.

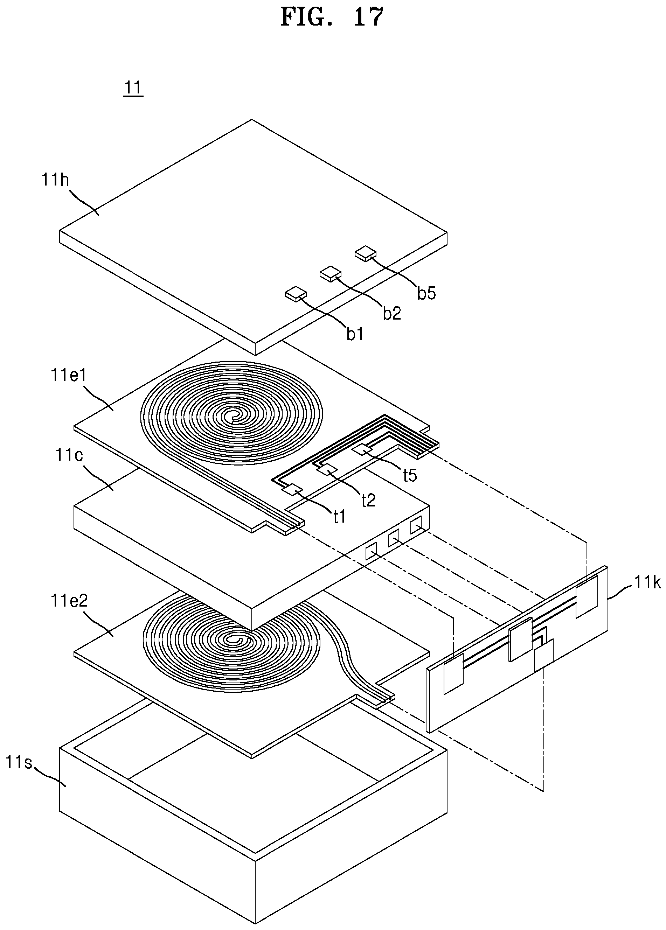

FIG. 17 is an exploded perspective view of a battery module of the aerosol-generating device related to the embodiment shown in FIG. 16.

The battery module 11 includes a battery cell 11c that may be charged with power, a lower case 11s configured to accommodate the battery cell 11c, and an upper cover 11h.

The reception antenna circuit 11e1 and the transmission antenna circuit 11e2 are arranged on surfaces on both sides of the battery cell 11c. A battery control board 11k is mounted on a side surface of the battery cell 11c.

Each of the reception antenna circuit 11e1 and the transmission antenna circuit 11e2 may include, for example, a flexible circuit board and an antenna for wireless power transmission/antenna for wireless power reception arranged on the circuit board.

A connection terminal for electrical connection with the battery control board 11k is protrudingly formed on an edge of each of the reception antenna circuit 11e1 and the transmission antenna circuit 11e2. The connection terminals of the reception antenna circuit 11e1 and the transmission antenna circuit 11e2 may be folded to be electrically connected to one surface of the battery control board 11k.

A battery terminal of the battery cell 11c may be electrically connected to another surface of the battery control board 11k.

The reception antenna circuit 11e1 includes intermediate terminals t1, t2, and t5 arranged in electrical wires electrically connected to the battery control board 11k.

Buttons b1, b2, and b5 respectively corresponding to the intermediate terminals t1, t2, and t5 are arranged on the upper cover 11h. Each of the buttons b1, b2, and b5 are arranged to be movable in the upper cover 11h. When the buttons b1, b2, and b5 are pressed, electrical connections between the electrical wires of the intermediate terminals t1, t2, and t5 corresponding to the buttons b1, b2, and b5 and the battery control board 11k may be established.

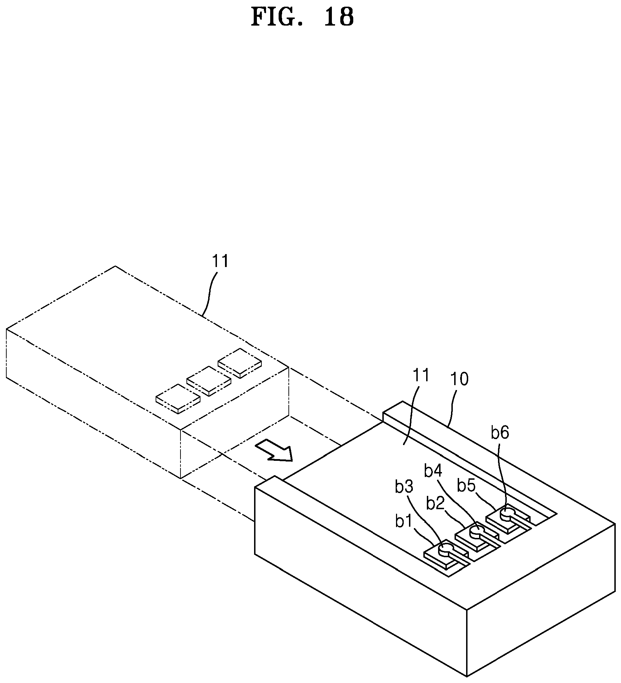

FIG. 18 is a schematic perspective view of the aerosol-generating device related to the embodiment shown in FIG. 16.

When the battery module 11 is mounted in the main body 10 of the aerosol-generating device, the buttons b1, b2, and b5 of the battery module 11 are positioned in an area that may be in contact with buttons b3, b4, and b6 of the main body 10.

Each of the buttons b3, b4, and b6 of the main body 10 are elements independently arranged outside an internal space of the main body 10 in which components of the main body 10 are mounted. One end of each of the buttons b3, b4, and b6 may be fixed to the main body 10, and another end of each of the buttons b3, b4, and b6 may be transformed by being pressed by a pressing force applied from the outside. When the buttons b3, b4, and b6 of the main body 10 are pressed by the manipulation of the user, the pressed buttons b3, b4, and b6 may press the corresponding buttons b1, b2, and b5 of the battery module 11.

As such, the structure of the buttons b3, b4, and b6 may include a cantilever structure. Embodiments are not limited by the structure of the buttons b3, b4, and b6 of the main body 10 described above, and various modifications are possible to independently install the buttons b3, b4, and b6 on the outside of the internal space of the main body 10. For example, the buttons b3, b4, and b6 may be supported by elastic elements such as springs and move relative to the main body 10 by a pressing force applied from the outside to press the buttons b1, b2, and b5 of the battery module 11.

According to the structures of the buttons b3, b4, and b6 of the main body 10 and the buttons b1, b2, and b5 and switches of the battery module 11 to operate the adjuster 11d of the battery module 11 as described above, a mounting space in which the battery module 11 is mounted and an internal space of the main body 10 may be completely separated from each other. Accordingly, components arranged in the internal space of the main body 10 may be safely protected, and residual materials, such as liquid generated in the aerosol-generating device, may be blocked from being transferred to the battery module 11.

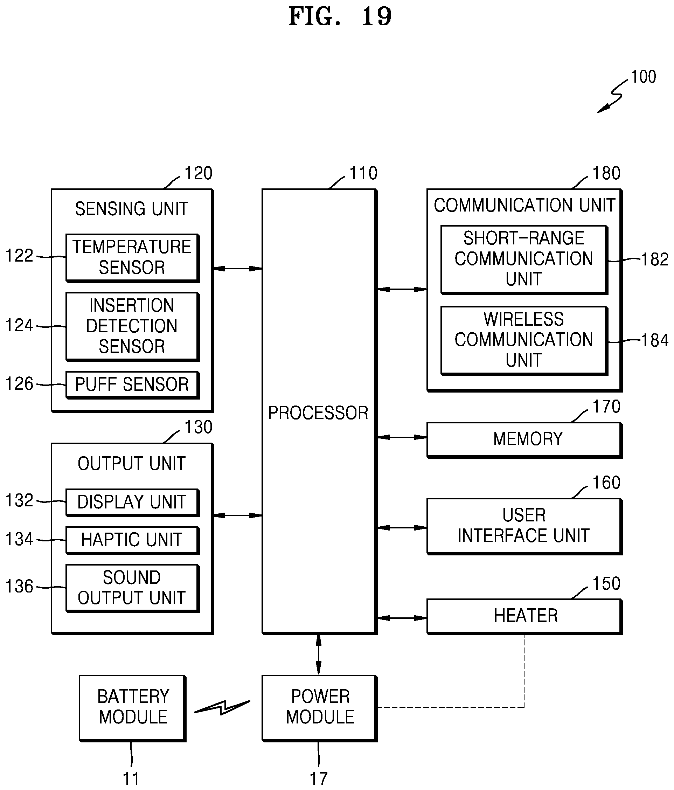

FIG. 19 is a block diagram schematically illustrating components of the aerosol-generating device related to the embodiments shown in FIGS. 1 to 18.

The aerosol generating device 100, for example, the aerosol generating device 1 shown in FIGS. 1-3, may include a controller 110, a sensing unit 120, an output unit 130, a battery module 11, a heater 150, a user input unit 160, a memory 170, and a communication unit 180. However, the internal structure of the aerosol generating device 100 is not limited to those illustrated in FIG. 19. That is, according to the design of the aerosol generating device 100, it will be understood by one of ordinary skill in the art that some of the components shown in FIG. 19 may be omitted or new components may be added.

The sensing unit 120 may sense a state of the aerosol generating device 100 and a state around the aerosol generating device 100, and transmit sensed information to the controller 110. Based on the sensed information, the controller 110 may control the aerosol generating device 100 to perform various functions, such as controlling an operation of the heater 150, limiting smoking, determining whether an aerosol generating article (e.g., a cigarette, a cartridge, or the like) is inserted, displaying a notification, or the like.

The sensing unit 120 may include at least one of a temperature sensor 122, an insertion detection sensor, and a puff sensor 126, but is not limited thereto.

The temperature sensor 122 may sense a temperature at which the heater 150 (or an aerosol generating material) is heated. The aerosol generating device 100 may include a separate temperature sensor for sensing the temperature of the heater 150, or the heater 150 may serve as a temperature sensor. Alternatively, the temperature sensor 122 may also be arranged around the battery module 11 to monitor the temperature of the battery module 11.

The insertion detection sensor 124 may sense insertion and/or removal of an aerosol generating article. For example, the insertion detection sensor 124 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 126 may sense a user's puff on the basis of various physical changes in an airflow passage or an airflow channel. For example, the puff sensor 126 may sense a user's puff on the basis of any one of a temperature change, a flow change, a voltage change, and a pressure change.

The sensing unit 120 may include, in addition to the temperature sensor 122, the insertion detection sensor 124, and the puff sensor 126 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 130 may output information on a state of the aerosol generating device 100 and provide the information to a user. The output unit 130 may include at least one of a display unit 132, a haptic unit 134, and a sound output unit 136, but is not limited thereto. When the display unit 132 and a touch pad form a layered structure to form a touch screen, the display unit 132 may also be used as an input device in addition to an output device.

The display unit 132 may visually provide information about the aerosol generating device 100 to the user. For example, information about the aerosol generating device 100 may mean various pieces of information, such as a charging/discharging state of the battery module 11 of the aerosol generating device 100, a preheating state of the heater 150, an insertion/removal state of an aerosol generating article, or a state in which the use of the aerosol generating device 100 is restricted (e.g., sensing of an abnormal object), or the like, and the display unit 132 may output the information to the outside. The display unit 132 may be, for example, a liquid crystal display panel (LCD), an organic light-emitting diode (OLED) display panel, or the like. In addition, the display unit 132 may be in the form of a light-emitting diode (LED) light-emitting device.

The haptic unit 134 may tactilely provide information about the aerosol generating device 100 to the user by converting an electrical signal into a mechanical stimulus or an electrical stimulus. For example, the haptic unit 134 may include a motor, a piezoelectric element, or an electrical stimulation device.

The sound output unit 136 may audibly provide information about the aerosol generating device 100 to the user. For example, the sound output unit 136 may convert an electrical signal into a sound signal and output the same to the outside.

The battery module 11 may supply power used to operate the aerosol generating device 100. The battery module 11 may supply power such that the heater 150 may be heated. In addition, the battery module 11 may supply power required for operations of other components (e.g., the sensing unit 120, the output unit 130, the user input unit 160, the memory 170, and the communication unit 180) in the aerosol generating device 100. The battery module 11 may be a rechargeable battery or a disposable battery. For example, the battery module 11 may be a lithium polymer (LiPoly) battery, but is not limited thereto.

The heater 150 may receive power from the battery module 11 to heat an aerosol generating material. Although not illustrated in FIG. 19, the aerosol generating device 100 may further include a power conversion circuit (e.g., a direct current (DC)/DC converter) that converts power of the battery module 11 and supplies the same to the heater 150. In addition, when the aerosol generating device 100 generates aerosols in an induction heating method, the aerosol generating device 100 may further include a DC/alternating current (AC) converter that converts DC power of the battery module 11 into AC power.

The controller 110, the sensing unit 120, the output unit 130, the user input unit 160, the memory 170, and the communication unit 180 may each receive power from the battery module 11 to perform a function. Although not illustrated in FIG. 19, the aerosol generating device 100 may further include a power conversion circuit that converts power of the battery module 11 to supply the power to respective components, for example, a low dropout (LDO) circuit, or a voltage regulator circuit.

In an embodiment, the heater 150 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 150 may be implemented by a metal wire, a metal plate on which an electrically conductive track is arranged, a ceramic heating element, or the like, but is not limited thereto.

In another embodiment, the heater 150 may be a heater of an induction heating type. For example, the heater 150 may include a susceptor that heats an aerosol generating material by generating heat through a magnetic field applied by a coil.

The user input unit 160 may receive information input from the user or may output information to the user. For example, the user input unit 160 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 19, the aerosol generating device 100 may further include a connection interface, such as a universal serial bus (USB) interface, and may connect to other external devices through the connection interface, such as the USB interface, to transmit and receive information, or to charge the battery module 11.

The memory 170 is a hardware component that stores various types of data processed in the aerosol generating device 100, and may store data processed and data to be processed by the controller 110. The memory 170 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 170 may store an operation time of the aerosol generating device 100, the maximum number of puffs, the current number of puffs, at least one temperature profile, data on a user's smoking pattern, etc.

The communication unit 180 may include at least one component for communication with another electronic device. For example, the communication unit 180 may include a short-range wireless communication unit 182 and a wireless communication unit 184.

The short-range wireless communication unit 182 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 184 may include a cellular network communication unit, an Internet communication unit, a computer network (e.g., local area network (LAN) or wide area network (WAN)) communication unit, or the like, but is not limited thereto. The wireless communication unit 184 may also identify and authenticate the aerosol generating device 100 within a communication network by using subscriber information (e.g., International Mobile Subscriber Identifier (IMSI)).

The controller 110 may control general operations of the aerosol generating device 100. In an embodiment, the controller 110 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 110 may control the temperature of the heater 150 by controlling supply of power of the battery module 11 to the heater 150. For example, the controller 110 may control power supply by controlling switching of a switching element between the battery module 11 and the heater 150. In another example, a direct heating circuit may also control power supply to the heater 150 according to a control command of the controller 110.

The controller 110 may analyze a result sensed by the sensing unit 120 and control subsequent processes to be performed. For example, the controller 110 may control power supplied to the heater 150 to start or end an operation of the heater 150 on the basis of a result sensed by the sensing unit 120. As another example, the controller 110 may control, based on a result sensed by the sensing unit 120, an amount of power supplied to the heater 150 and the time the power is supplied, such that the heater 150 may be heated to a certain temperature or maintained at an appropriate temperature.

The controller 110 may control the output unit 130 on the basis of a result sensed by the sensing unit 120. For example, when the number of puffs counted through the puff sensor 126 reaches a preset number, the controller 110 may notify the user that the aerosol generating device 100 will soon be terminated through at least one of the display unit 132, the haptic unit 134, and the sound output unit 136.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

The descriptions of the above-described embodiments are merely examples, and it will be understood by one of ordinary skill in the art that various changes and equivalents thereof may be made. Therefore, the scope of the disclosure should be defined by the appended claims, and all differences within the scope equivalent to those described in the claims will be construed as being included in the scope of protection defined by the claims.

### Industrial Applicability

Embodiments relate to an aerosol-generating device, and more particularly to, an aerosol-generating device in which a battery module configured to supply power wirelessly may be removably mounted.

## Claims

1. An aerosol-generating device comprising:
a main body;
an aerosol generator arranged in the main body and configured to generate aerosols when power is supplied;
a power module arranged in the main body and configured to supply power to the aerosol generator by wirelessly receiving power; and
a battery module configured to charge power, removably mounted in the main body, and configured to wirelessly transmit the power to the power module.

2. The aerosol-generating device of claim 1, wherein the battery module comprises a battery cell configured to be charged with power, a transceiver configured to operate in a charging mode of charging power to the battery cell by wirelessly receiving power or a transmission mode of wirelessly transmitting power of the battery cell to the power module, and an adjuster configured to generate a signal for the transceiver to operate in the transmission mode or the charging mode.

3. The aerosol-generating device of claim 2, wherein the transceiver comprises an antenna circuit and a voltage regulator arranged between the battery cell and the antenna circuit and configured to regulate a voltage.

4. The aerosol-generating device of claim 3, wherein the transceiver comprises a rectifier configured to convert alternating current power into direct current power or to convert direct current power into alternating current power.

5. The aerosol-generating device of claim 3, wherein the transceiver further comprises an impedance matcher configured to match an impedance of the voltage regulator with an impedance of the antenna circuit.

6. The aerosol-generating device of claim 1, wherein the battery module comprises a battery cell configured to be charged with power, a receiver configured to charge power to the battery cell by wirelessly receiving power, a transmitter configured to wirelessly transmit power of the battery cell to the power module, an adjuster configured to generate a signal to select and perform a transmission mode in which the transmitter operates or a charging mode in which the receiver operates.

7. The aerosol-generating device of claim 6, wherein the receiver comprises a reception antenna circuit and a rectifier arranged between the reception antenna circuit and the battery cell and configured to convert alternating current power into direct current power.

8. The aerosol-generating device of claim 7, wherein the receiver further comprises a voltage regulator arranged between the battery cell and the reception antenna circuit and configured to regulate a voltage, and an impedance matcher configured to match an impedance of the voltage regulator with an impedance of the reception antenna circuit.

9. The aerosol-generating device of claim 6, wherein the transmitter comprises a transmission antenna circuit and a rectifier arranged between the transmission antenna circuit and the battery cell and configured to convert direct current power into alternating current power.

10. The aerosol-generating device of claim 9, wherein the transmitter further comprises a voltage regulator arranged between the battery cell and the transmission antenna circuit and configured to regulate a voltage, and an impedance matcher configured to match an impedance of the voltage regulator with an impedance of the transmission antenna circuit.

11. The aerosol-generating device of claim 2, further comprising a capacitor arranged in the main body and configured to charge power wirelessly supplied from the battery module, and a communication unit arranged in the main body and configured to transmit a wireless signal to the battery module,
wherein the battery module further comprises a battery communicator configured to wirelessly communicate with the communication unit, and the adjuster generates a signal based on the wireless signal transmitted through the battery communicator.

12. The aerosol-generating device of claim 2, further comprising a controller configured to control the aerosol generator and a communication unit arranged in the main body and configured to transmit a wireless signal to the battery module,
wherein the battery module further comprises a battery communicator configured to wirelessly communicate with the communication unit, and,
when the battery module operates in the charging mode, the controller stops an operation in which the aerosol generator generates aerosols.

13. The aerosol-generating device of claim 12, wherein, when the charging mode of the battery module is terminated and the battery module operates in the transmission mode, the controller initiates an operation in which the aerosol generator generates aerosols.

14. The aerosol-generating device of claim 1, wherein the main body comprises a mounting space in which the battery module is mounted and an internal space in which the power module is arranged, wherein the mounting space and the internal space are separated from each other to prevent movement of materials between the mounting space and the internal space.

15. The aerosol-generating device of claim 1, further comprising a position adjuster configured to adjust a position of the battery module with respect to the main body to align a center of the power module with a center of the battery module.
